# FASCICULE DE BREVET EUROPEEN

(11) **EP 4 227 187 B1**
(45) Date de publication et mention de la délivrance du brevet: **11.06.2025**
(21) Numéro de dépôt: 23155761.2
(22) Date de dépôt: 09.02.2023
(51) Int. Cl.: B61D 37/00, B60N 3/00, B64D 11/06

(54) **TABLE POUR VÉHICULE ET VÉHICULE, NOTAMMENT FERROVIAIRE, COMPRENANT UNE TELLE TABLE**
TISCH FÜR EIN FAHRZEUG UND FAHRZEUG, INSBESONDERE SCHIENENFAHRZEUG, MIT EINEM SOLCHEN TISCH
TABLE FOR A VEHICLE AND VEHICLE, IN PARTICULAR RAILWAY VEHICLE, COMPRISING SUCH A TABLE

(30) Priorité: 10.02.2022 FR 2201176
(43) Date de publication de la demande: 16.08.2023
(73) Titulaire: ALSTOM Holdings, 93400 Saint-Ouen-sur-Seine (FR)
(72) Inventeur: LE-CORRE, Dominique Marcel Jacques, 67350 Val de Moder - Pfaffenhoffen (FR); COMETTO, Marie Céline Madeleine, 13600 La Ciotat (FR); LANGLOIS, Francis Pierre Denis, 59310 Faumont (FR)
(74) Mandataire: Plasseraud IP

(56) Documents cités:
- EP-A1- 3 456 603
- DE-A1- 102009 034 511

## Description

La présente invention concerne une table pour un véhicule, notamment un véhicule ferroviaire, ainsi qu'un véhicule, notamment un véhicule ferroviaire, pour le transport de passagers, qui comprend des sièges et au moins une table disposée en regard d'au moins un siège.

Dans le domaine du transport de passagers, il est connu d'équiper une voiture de véhicule ferroviaire avec des sièges et une ou plusieurs tables disposées en regard de certains au moins de ces sièges, qui présentent chacune une surface supérieure horizontale permettant de travailler, de manger ou d'y déposer des objets pendant le trajet.

Une telle table peut être suspendue à une paroi latérale de la caisse du véhicule ou être accrochée à cette paroi et reposer sur le sol au moyen d'un pied d'appui.

Pour des raisons de sécurité, en cas d'accident, il est connu de prévoir qu'une telle table absorbe une partie de l'énergie cinétique d'un passager qui serait projeté vers elle du fait d'une décélération brutale du véhicule. Ainsi il est connu de EP-A-3 456 603 de monter une structure à parallélogramme sous le plateau d'une table, afin de la raccorder à une paroi de la caisse d'un véhicule, cette structure à parallélogramme comprenant des zones d'amorçage de pliage configurées pour se déformer plastiquement lorsqu'un effort supérieur ou égal à un effort seuil prédéterminé est appliqué sur cette structure. Cette approche donne globalement satisfaction pour une table dépourvue de pied d'appui au sol mais ne serait pas transposable à une table dotée d'un pied d'appui au sol.

Or, dans certaines configurations au moins, il est souhaitable de pouvoir utiliser une table avec un pied d'appui au sol, notamment pour pouvoir supporter des charges relativement importantes.

Pour ce type de table, il est connu de EP-A-2 574 518 d'utiliser un module d'accrochage entre la table et une paroi du véhicule, ce module d'accrochage comprenant des glissières dans lesquelles peuvent coulisser des doigts pour accompagner une déformation de ce module d'accrochage en cas de choc et absorber ainsi une partie de l'énergie cinétique d'un passager projeté en cas d'arrêt brutal du véhicule. Ce module d'accrochage est relativement complexe à fabriquer et à installer.

C'est à ces inconvénients qu'entend plus particulièrement remédier l'invention en proposant une nouvelle table pour véhicule, notamment ferroviaire, qui permet d'amortir efficacement un choc avec un passager et dont la structure est simple à fabriquer, à installer et à entretenir.

À cet effet, l'invention concerne une table pour véhicule, notamment ferroviaire, cette table comprenant un plateau, un pied d'appui au sol et un module d'accrochage de la table à une paroi du véhicule, ce module étant déformable plastiquement sous un effort prédéterminé. Conformément à l'invention, le module d'accrochage comprend une pièce déformable sous l'effort prédéterminé et dans la direction de cet effort, la pièce déformable étant à section en oméga, en U ou en C, avec une partie centrale et deux pattes intermédiaires. En outre, la pièce déformable est fixée, par sa partie centrale, à une première structure parmi le plateau et la paroi et elle est fixée, par des platines d'extrémité, reliées à la partie centrale par les pattes intermédiaires, ou par des bords libres de ses pattes intermédiaires, à une deuxième structure parmi la paroi et le plateau. De plus, le module d'accrochage comprend un cadre de guidage et de limitation des déformations de la pièce déformable.

Grâce à l'invention, en cas d'effort supérieur à l'effort prédéterminé, la pièce à section en oméga, en U ou en C peut se déformer plastiquement pour accompagner un déplacement du plateau de la table par rapport à la paroi du véhicule, ce qui permet d'amortir un choc avec un passager. La forme à section en oméga, en U ou en C de la pièce déformable lui permet de se déformer dans des conditions prévisibles. Cette pièce déformable est relativement aisée et économique à fabriquer et à installer.

Selon des aspects avantageux, mais non obligatoire de l'invention, une telle table peut incorporer une ou plusieurs des caractéristiques suivantes, prises selon toutes combinaisons techniquement admissibles :
- Les pattes intermédiaires divergent en allant des platines d'extrémité vers la partie centrale ou en allant des bords libres des pattes intermédiaires vers la partie centrale, avec un angle de divergence compris entre 5 et 120 degrés, de préférence égal à 20°.
- La pièce déformable est pourvue d'au moins un trou, de préférence oblong, de création d'une zone de déformation privilégiée de la pièce déformable.
- La pièce déformable est pourvue de quatre trous.
- Le ou chaque trou est situé sur une arête de jonction entre une patte intermédiaire et une platine d'extrémité ou sur une arête de jonction entre une patte intermédiaire et la partie centrale.
- La pièce déformable est logée dans un volume défini par le cadre de guidage, le cadre de guidage est en forme de boîte parallélépipédique avec des parois de guidage des déformations parallèles à l'effort prédéterminé et des parois de limitation des déformations perpendiculaires à l'effort prédéterminé.
- La pièce déformable est constituée dans une bande de métal, de préférence en acier au carbone, avec une épaisseur comprise entre 0,5 et 8 mm, de préférence égale à 4 mm.
- La partie déformable est fabriquée en une pièce, par découpage et pliage d'une tôle.

Selon un autre aspect, l'invention concerne également un véhicule, notamment ferroviaire, de transport de passagers, comprenant des sièges et au moins une table disposée en regard d'au moins un siège, caractérisé en ce que la table est telle que mentionnée ci-dessus.

Ce véhicule induit les mêmes avantages que la table mentionnée ci-dessus.

L'invention sera mieux comprise et d'autres avantages de celle-ci apparaitront plus clairement à la lumière de la description qui va suivre d'un mode de réalisation d'une table pour véhicule et d'un véhicule équipé d'un telle table, donnée uniquement à titre d'exemple et faite en référence aux dessins annexés dans lesquels :
[Fig. 1] La figure 1 est une vue schématique en perspective d'une partie d'une voiture appartenant à un véhicule ferroviaire conforme à l'invention et équipé d'une table conforme à l'invention ;
[Fig. 2] La figure 2 est une vue en perspective par le dessous d'un module d'accrochage fixant la table à une paroi de la voiture de la figure 1, en configuration d'utilisation ;
[Fig.3] La figure 3 est une vue en perspective éclatée du module d'accrochage représenté à la figure 2 ; et
[Fig. 4] La figure 4 est une représentation schématique de principe de la table en cours d'utilisation avant un impact, au début d'un impact et à la fin d'un impact avec, sous chaque représentation de la table, une ou plusieurs représentations schématiques en vue de dessus ou en perspective du module d'accrochage, dans chacune de ces configurations.

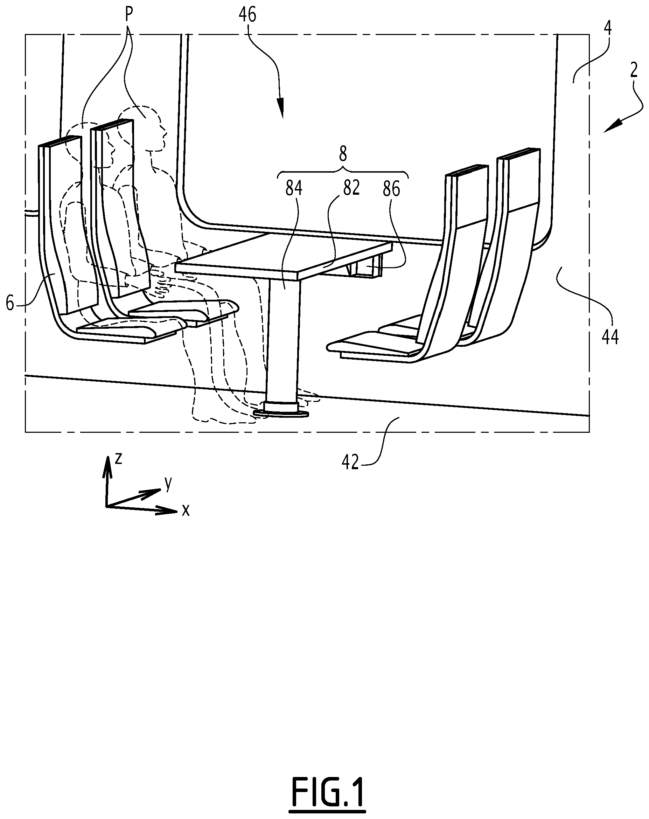

Un véhicule ferroviaire, dans l'exemple un train, est partiellement représenté à la figure 1. Il comprend une voiture dont la caisse 4 définit un plancher 42 et une paroi 44 donnant sur l'extérieur et dans laquelle est définie une fenêtre 46.

En variante non représentée, le véhicule ferroviaire 1 peut être composé de plusieurs voitures, avec chacune une caisse 4. En variante non représentée, le véhicule 1 peut être un tramway, ou bien un véhicule routier, tel qu'un autocar, un véhicule de transport aérien, tel qu'un avion, voire encore un véhicule de transport maritime, tel qu'un paquebot.

On note respectivement X, Y et Z un axe longitudinal, un axe transversal et un axe vertical de la caisse 4.

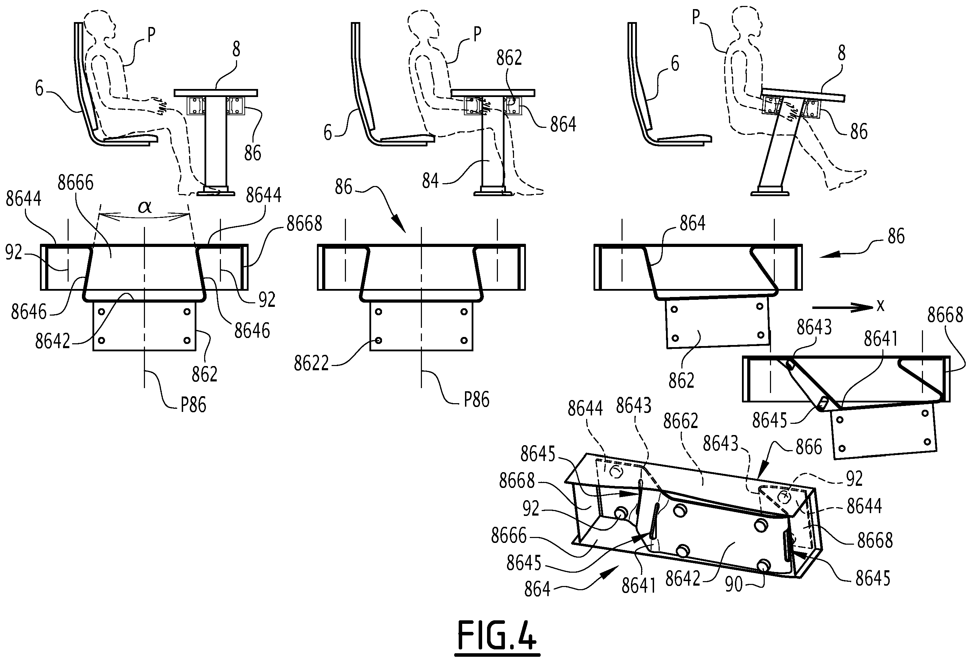

Quatre sièges 6 sont visibles à la figure 1 et permettent à quatre passagers de s'asseoir de part et d'autre d'une table 8 qui comprend un plateau 82 et un pied 84 d'appui sur le plancher 42. Deux de ces passagers P sont représentés en pointillés sur la gauche de la figure 1. Un de ces passagers P est représenté, en pointillés également, à la figure 4.

La table 8 comprend également un module d'accrochage 86 permettant d'immobiliser sur la paroi 44 une partie du plateau 82 adjacente à cette paroi.

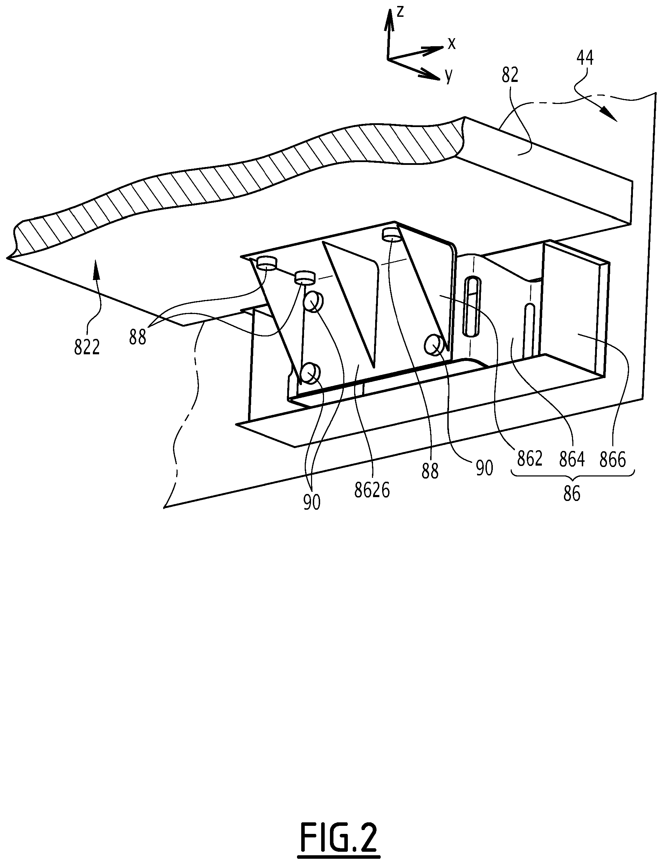

À la figure 2, qui est une vue en contre-plongée, le module d'accrochage 86 est visible en étant fixé contre une face inférieure 822 du plateau 82 et contre la paroi 44. Plus précisément, le module d'accrochage 86 comprend une équerre 862 immobilisée sur le plateau 82 au moyen de quatre vis 88 dont trois sont visibles à la figure 2 et qui traversent chacune un orifice 8622 ménagé dans un voile supérieur 8624 de l'équerre 862.

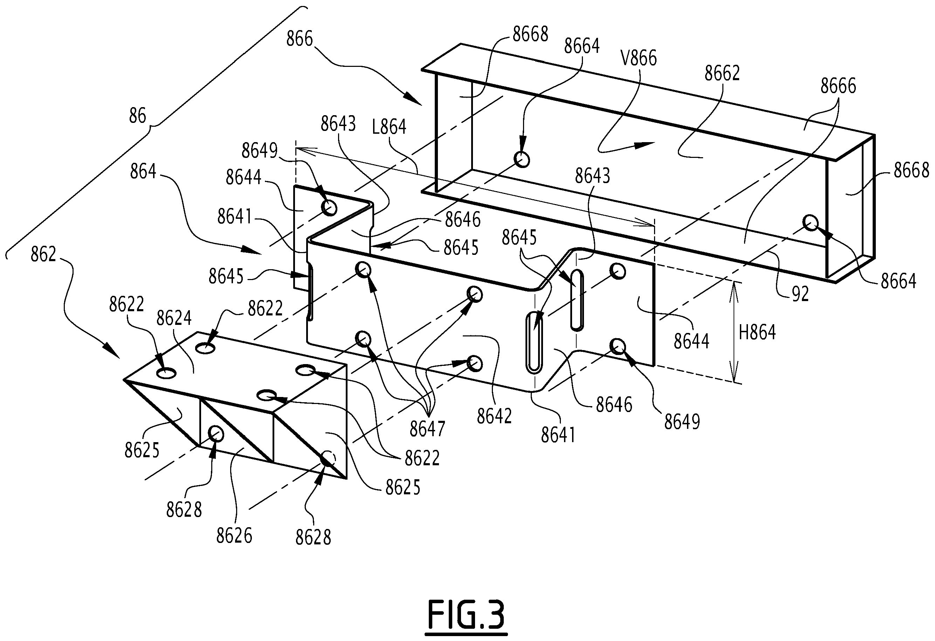

D'autre part, l'équerre 862 comprend un voile 8626 perpendiculaire au voile 8624 et dans lequel sont ménagés quatre orifices 8628 de passage de quatre vis 90, dont trois sont visibles à la figure 2. Deux des orifices 8628 sont visibles à la figure 3.

Le module d'accrochage 86 comprend également une pièce déformable 864 qui présente, en section parallèle aux axes X et Y en configuration montée normale de la table 8 dans la caisse 4, une forme en oméga, ou Ω, avec une partie centrale 8642, deux platines d'extrémité 8644 et deux pattes 8646 qui relient chacune la partie centrale 8642 à l'une des platines d'extrémité 8644.

On note L864 la longueur de la pièce 864 mesurée parallèlement à sa plus grande dimension et qui s'étend parallèlement à l'axe X en configuration montée de la table 8. La longueur L864 peut être choisie entre 150 et 600 mm. À titre d'exemple, elle peut être égale à environ 400 mm.

On note H864 la hauteur de la pièce déformable 864 qui s'étend transversalement à sa longueur et parallèlement à la partie centrale 8642, cette hauteur étant parallèle à l'axe Z en configuration montée de la table 8. La hauteur H864 a une valeur comprise entre 50 et 400 mm. À titre d'exemple, elle peut être égale à environ 110 mm.

On note 8641 une arête de jonction entre la partie centrale 8642 et l'une des pattes 8646. On note 8643 une arête de jonction entre une platine 8644 et la patte 8646 adjacente. Un trou oblong 8645 est ménagé dans chacune des arêtes 8641 et 8643. Ainsi, il est prévu quatre trous oblongs 8645, dont la plus grande dimension est parallèle à la hauteur H864 et qui se répartissent sur les quatre arêtes 8641 et 8643.

En pratique, les dimensions des trous oblongs 8645 sont choisies en fonction des dimensions de la pièce déformable 864. Dans l'exemple, les trous oblongs ont une longueur parallèle à la hauteur H864 comprise entre 10 et 350 mm, de préférence égale à 60 mm, et une largeur perpendiculaire à leur longueur comprise entre 3 et 50 mm, de préférence égale à 10 mm.

D'autre part, la partie centrale 8642 est pourvue de quatre perçages 8647 de passage des vis 90, ce qui permet de monter l'équerre 862 sur la partie centrale 8642.

Chacune des platines 8644 est pourvue de deux orifices 8649 de passage d'une vis de fixation 92 de la pièce 864 sur la paroi 44, en passant à travers un voile de fond 8662, d'un cadre 866 qui appartient également au module d'accrochage 86. Pour ce faire, le voile de fond 8662 est pourvu de quatre orifices 8664 de passage des vis de fixation 92 de la pièce 864 sur la paroi 44, lesquelles vis de fixation sont représentées par leurs traits d'axes respectifs sur la figure 3 et les vues de dessus de la figure 4 et par leurs têtes respectives sur la vue en perspective de la figure 4.

Le cadre 866 est formé par découpage et pliage d'une tôle qui constitue le voile de fond 8662 et deux bords 8666 parallèles à la longueur L864 de la pièce 864 en configuration montée du module d'accrochage. Deux côtés 8668 du cadre 866 sont soudés sur le voile de fond 8662 et les bords 8666, de telle sorte que le cadre 866 a une forme de boîte globalement parallélépipédique qui définit un volume V866 de réception de la pièce 864 en configuration montée du module d'accrochage 86.

Pour la clarté du dessin, le bord supérieur 8666 n'est pas représenté sur les vues de dessus de la figure 4.

Dans ce mode de réalisation, la pièce déformable 864 est réalisée dans une tôle de métal, de préférence en acier au carbone, avec une épaisseur comprise entre 0,5 et 8 mm, de préférence de l'ordre de 4 mm.

En pratique, la pièce déformable 864 est réalisée par découpe laser des trous oblongs 8645 et des orifices 8647 et 8649 puis par pliage le long des arêtes 8641 et 8643 afin d'obtenir la section en oméga visible aux figures 3 et 4.

Sur la figure 4 on remarque que, avant déformation plastique liée à un choc, les pattes intermédiaires 8646 divergent en allant des platines d'extrémité 8644 vers la partie centrale 8642 avec un angle de divergence α compris entre 5 et 120 degrés, de préférence égal à 20 degrés. Le caractère divergent des pattes intermédiaires 8646 permet de maximiser la déformation de la pièce 864 en cas de choc survenant sur le plateau 82 dans la direction de l'axe X.

Lorsque la pièce déformable 864 est montée dans le cadre 866, ses déformations éventuelles sont possibles dans la limite du volume V866. En particulier, les bords 8666 guident les bords des parties 8642 et 8646 de la pièce déformable 864 qui leurs sont parallèles. D'autre part, les côtés 8668 peuvent recevoir en appui une partie de la pièce 864, notamment une arête de jonction 8641 ou une partie d'une patte intermédiaire 8646. Ceci permet de guider et de limiter les déformations de la pièce 864 dans une direction parallèle à sa longueur L864 et à l'axe X. En d'autres termes, la géométrie de la pièce 864 et du cadre 866 permet au cadre 866 de contenir les déformations de la pièce 864, sans que le cadre 866 ne se déforme.

Comme représenté à la figure 4, en configuration normale d'avance du véhicule 2, un passager P est assis sur un siège 6, à distance de la table 8. Le module d'accrochage 86 est dans la configuration normale représentée sur la gauche de la figure 4, dans laquelle les pièces 862, 864 et 866 sont symétriques de part et d'autre d'un plan médian P86 qui passe par le centre de la partie 8642, à égale distance des arêtes 8641, et qui est parallèle aux axes Y et Z.

En cas d'impact, et du fait de son inertie, le passager P glisse par rapport au siège 6, jusqu'à heurter la table 8, comme représenté au centre de la figure 4. A cette instant, le module d'accrochage 86 est encore dans sa configuration normale, comme visible en partie basse et au centre de la figure 4.

Du fait de la poursuite du déplacement du passager P, du fait de son inertie, et comme représenté sur la droite de la figure 4, celui-ci tend à déformer plastiquement le module d'accrochage 86 qui prend successivement une première configuration et une deuxième configuration représentées sur les deux figures en vue de dessus en bas et à droite de la figure 4. La vue en perspective en bas à droite de la figure 4 représente la deuxième configuration, l'équerre 862 étant omise pour une meilleure visualisation de la pièce 864, alors que le bord supérieur 8666 y est représenté.

La déformation plastique de la pièce à section en oméga 864 a lieu pour autant que l'effort exercé par le passager du fait de son inertie a une intensité supérieure à une valeur donnée, cette valeur étant par exemple comprise entre 1500 et 4000 newton.

En pratique, comme représenté en bas et à droite de la figure 4, l'équerre 862 tend à suivre le mouvement du plateau 82 de la table 8 dont elle est solidaire, ce plateau subissant l'effort exercé par le passager P. En supposant l'équerre 862 rigide, ce qui est à rapprocher de sa structure relativement compacte et des nervures 8625 qui s'étendent entre les voiles 8624 et 8626, le mouvement du plateau 82 est transmis à la pièce 864 qui se déforme, en étant guidée et confinée par le cadre 866 dans la direction de l'axe X, c'est-à-dire dans la direction de l'effort qu'elle subit du fait du déplacement du passager P. Cette déformation de la pièce 864 est limitée par l'appui d'une partie de cette pièce contre l'un des côtés 8668, comme représenté sur la deuxième figure schématique en partie basse et à droite de la figure 4.

En cas de déplacement maximum, la pièce 864 prend la deuxième configuration représentée en vue de dessus et en perspective en partie basse et à droite de la figure 4.

Grâce aux trous oblongs 8645, des zones de déformation privilégiée de la pièce 864 sont créées au niveau des arêtes 8641 et 8643, ce qui permet à la pièce 864 de ne pas être trop rigide selon une direction parallèle à l'axe X, afin de limiter les risques de blessure du passager P, puisque l'effort prédéterminé sous lequel se déforme le module 86 peut avoir une valeur relativement faible et puisque la déformation progressive de la pièce 864 permet d'absorber, sur un laps de temps prédéfini, une partie de l'énergie cinétique du passager P.

Les trous oblongs 8645 et le cadre 866 contribuent à définir et à contrôler la déformation de la pièce 864, ce qui permet de respecter *a priori* un critère de sécurité selon lequel le bord du plateau 82 ne doit pas pénétrer de plus de 67 mm dans la partie inférieure de l'abdomen du passager P au cours d'un impact.

Il ressort des explications qui précèdent que, au cours de la déformation du module d'accrochage 86, seule la pièce déformable 864 se déforme, alors que les autres pièces, notamment l'équerre 862 et le cadre 866, conservent leur géométrie, sans se déformer. Pour la présentation de l'invention, on suppose que le plateau 82 et la paroi 44 sont également indéformables.

Dans ce mode de réalisation, la pièce déformable 864 est la seule pièce du module d'accrochage 86 étant déformable. En d'autres termes, le module d'accrochage comprend une unique pièce déformable. Selon une variante non représentée de l'invention, le module d'accrochage 86 comprend d'autres pièces susceptibles de se déformer, comme par exemple l'équerre 862.

Selon une variante non représentée de l'invention, la configuration de montage de la pièce déformable 864 pourrait être inversée. Elle peut être solidarisée à la paroi 44 à travers le cadre 866 par sa partie centrale 8642 et solidarisée à une équerre, comparable à l'équerre 862 et fixée sur le plateau 82, par ses platines d'extrémité 8644.

Selon une autre variante non représentée de l'invention, la pièce déformable 864 a une section en forme de U, avec une partie centrale fixée à l'équerre 862 et deux pattes dont les bords libres sont soudés sur le cadre 866.

Selon une autre variante non représentée de l'invention, la pièce déformable 864 a une section en forme de C, avec une partie centrale fixée à l'équerre 862, deux platines fixées sur le cadre 866 et deux pattes intermédiaires reliant cette partie centrale et ces platines. La différence entre une section en forme de C et une section en forme d'oméga est que, dans la section en forme de C, les platines sont situées entre les pattes intermédiaires, et non pas de part et d'autre de celles-ci, comme dans une section en forme d'oméga. Une section en forme de C présente une meilleure compacité longitudinale qu'une section en forme d'oméga.

Dans le cas d'une pièce déformable à section en forme de U ou de C, les pattes intermédiaires peuvent également être divergentes, en allant de leur bord libre ou des platines d'extrémité vers la partie centrale, en définissant un angle de divergence comparable à l'angle α mentionné ci-dessus.

Selon une autre variante non représentée de l'invention, applicable à une section en oméga, en U ou en C de la pièce déformable 864, les pattes intermédiaires sont parallèles.

Selon une autre variante non représentée de l'invention, dans le cas où un support fixe est en saillie par rapport à la paroi 44, le module d'accrochage 86 peut être intercalé entre une surface supérieure de ce support et la face inférieure 822 du plateau 82. Dans ce cas, il n'est pas nécessaire d'utiliser l'équerre 862 et le sous-ensemble formé des pièces 864 et monté de telle sorte que le voile de fond 8662 et la partie centrale 8642 sont horizontaux.

Selon une autre variante non représentée de l'invention, les trous oblongs 8645 peuvent être prévus sur certaines seulement des arêtes 8641 et 8643, voire omis totalement.

Selon une autre variante non représentée de l'invention, les trous 8645 peuvent être de forme circulaire, elliptique, ou de toute autre forme.

Selon une autre variante non représentée de l'invention, d'autres configurations des pièces 862, 864 et 866 peuvent être prévues avec un nombre de perçages 8647 et d'orifices 8628 différent de quatre, un nombre d'orifices 8649 différent de deux par platine et un nombre d'orifices 8664 différent de quatre, adapté au nombre d'orifices 8649.

Selon une autre variante non représentée de l'invention, d'autres configurations de l'intérieur de la voiture du véhicule peuvent être prévues, avec de un à six sièges positionnés autour de la table 8.

## Revendications

1. Table (8) pour véhicule (2), notamment ferroviaire, cette table comprenant un plateau (82), un pied (84) d'appui au sol et un module d'accrochage (86) de la table à une paroi (44) du véhicule, ce module étant déformable plastiquement sous un effort prédéterminé, dans laquelle :
- le module d'accrochage (86) comprend une pièce déformable (864) sous l'effort prédéterminé et dans la direction de cet effort ;
- la pièce déformable est à section en oméga, en U ou en C, avec une partie centrale (8642) et deux pattes intermédiaires (8646) ;
- la pièce déformable est fixée, par sa partie centrale, à une première structure (82 ; 44) parmi le plateau et la paroi ;
- la pièce déformable est fixée, par des platines d'extrémité (8644), reliées à la partie centrale par les pattes intermédiaires, ou par des bords libres de ses pattes intermédiaires, à une deuxième structure (44 ; 82) parmi la paroi et le plateau ; **caractérisée en ce que**
- le module d'accrochage (86) comprend un cadre (866) de guidage et de limitation des déformations de la pièce déformable (864).

2. Table (8) selon la revendication 1, **caractérisée en ce que** les pattes intermédiaires (8646) divergent en allant des platines d'extrémité (8644) vers la partie centrale (8642) ou en allant des bords libres des pattes intermédiaires (8646) vers la partie centrale, avec un angle de divergence (α) compris entre 5 et 120 degrés, de préférence égal à 20°.

3. Table (8) selon l'une des revendications précédentes, **caractérisée en ce que** la pièce déformable (864) est pourvue d'au moins un trou (8645), de préférence oblong, de création d'une zone (8641, 8643) de déformation privilégiée de la pièce déformable.

4. Table (8) selon la revendication 3, **caractérisée en ce que** la pièce déformable (864) est pourvue de quatre trous (8645).

5. Table (8) selon l'une des revendications 3 ou 4, **caractérisée en ce que** le ou chaque trou (8645) est situé sur une arête (8643) de jonction entre une patte intermédiaire (8646) et une platine d'extrémité (8644) ou sur une arête (8641) de jonction entre une patte intermédiaire et la partie centrale (8642).

6. Table (8) selon l'une des revendications précédentes, **caractérisée en ce que** la pièce déformable (864) est logée dans un volume (V866) défini par le cadre de guidage (866), **en ce que** le cadre de guidage est en forme de boîte parallélépipédique avec des parois de guidage (8666) des déformations parallèles à l'effort prédéterminé et des parois de limitation (8668) des déformations perpendiculaires à l'effort prédéterminé.

7. Table (8) selon l'une des revendications précédentes, **caractérisée en ce que** la pièce déformable (864) est constituée dans une bande de métal, de préférence en acier au carbone, avec une épaisseur comprise entre 0,5 et 8 mm, de préférence égale à 4 mm.

8. Table (8) selon l'une des revendications précédentes, **caractérisée en ce que** la partie déformable (864) est fabriquée en une pièce, par découpage et pliage d'une tôle.

9. Véhicule (2), notamment ferroviaire, de transport de passagers (P), comprenant des sièges (6) et au moins une table (8) disposée en regard d'au moins un siège, **caractérisé en ce que** la table (8) est selon l'une des revendications précédentes.

## Patentansprüche

1. Tisch (8) für ein Fahrzeug (2), insbesondere ein Schienenfahrzeug, wobei der Tisch eine Platte (82), einen Fuß (84) zur Auflage auf dem Boden und ein Modul (86) zum Einhängen des Tisches an einer Wand (44) des Fahrzeugs umfasst, wobei dieses Modul unter einer vorbestimmten Kraft plastisch verformbar ist, wobei:
- das Einhängmodul (86) ein unter der vorbestimmten Kraft und in Richtung dieser Kraft verformbares Teil (864) umfasst;
- das verformbare Teil einen Omega-, U- oder C-förmigen Querschnitt aufweist, mit einem Mittelteil (8642) und zwei Zwischenplatten (8646);
- das verformbare Teil mit seinem Mittelteil an einer ersten Struktur (82; 44) zwischen der Platte und der Wand befestigt ist;
- das verformbare Teil durch Endplatten (8644), die über die Zwischenlaschen mit dem Mittelteil verbunden sind, oder durch freie Kanten seiner Zwischenlaschen an einer zweiten Struktur (44; 82) zwischen der Wand und der Platte befestigt ist; **dadurch gekennzeichnet, dass**
- das Einhängmodul (86) einen Rahmen (866) zur Führung und Begrenzung der Verformungen des verformbaren Teils (864) umfasst.

2. Tisch (8) nach Anspruch 1, **dadurch gekennzeichnet, dass** die Zwischenplatten (8646) von den Endplatten (8644) zum Mittelteil (8642) oder von den freien Kanten der Zwischenplatten (8646) zum Mittelteil hin divergieren, mit einem Divergenzwinkel (α) zwischen 5 und 120 Grad, bevorzugt gleich 20°.

3. Tisch (8) nach einem der vorhergehenden Ansprüche, **dadurch gekennzeichnet, dass** das verformbare Teil (864) mit wenigstens einem, bevorzugt länglichen Loch (8645) versehen ist, um eine bevorzugte Verformungszone (8641, 8643) des verformbaren Teils zu schaffen.

4. Tisch (8) nach Anspruch 3, **dadurch gekennzeichnet, dass** das verformbare Teil (864) mit vier Löchern (8645) versehen ist.

5. Tisch (8) nach einem der Ansprüche 3 oder 4, **dadurch gekennzeichnet, dass** sich das oder jedes Loch (8645) an einer Verbindungskante (8643) zwischen einer Zwischenplatte (8646) und einer Endplatte (8644) oder an einer Verbindungskante (8641) zwischen einer Zwischenplatte und dem Mittelteil (8642) befindet.

6. Tisch (8) nach einem der vorhergehenden Ansprüche, **dadurch gekennzeichnet, dass** das verformbare Teil (864) in einem Volumen (V866) augenommen ist, das durch den Führungsrahmen (866) definiert ist, und dass der Führungsrahmen die Form eines quaderförmigen Kastens mit Führungswänden (8666) für die parallel zur vorbestimmten Kraft verlaufenden Verformungen und Begrenzungswänden (8668) für die senkrecht zur vorbestimmten Kraft verlaufenden Verformungen aufweist.

7. Tisch (8) nach einem der vorhergehenden Ansprüche, **dadurch gekennzeichnet, dass** das verformbare Teil (864) aus einem Metallband, bevorzugt aus Kohlenstoffstahl, mit einer Dicke zwischen 0,5 und 8 mm, bevorzugt gleich 4 mm, besteht.

8. Tisch (8) nach einem der vorhergehenden Ansprüche, **dadurch gekennzeichnet, dass** das verformbare Teil (864) aus einem Stück hergestellt ist, indem ein Blech geschnitten und gebogen wird.

9. Fahrzeug (2), insbesondere Schienenfahrzeug, für den Transport von Passagieren (P), mit Sitzen (6) und wenigstens einem Tisch (8), der gegenüber wenigstens einem Sitz angeordnet ist, **dadurch gekennzeichnet, dass** der Tisch (8) einem der vorhergehenden Ansprüche entspricht.

## Claims

1. A table (8) for a vehicle (2), in particular a railway vehicle, this table comprising a tray (82), a foot (84) for support on the floor and a module (86) for hooking the table to a wall (44) of the vehicle, this module being plastically deformable under a predetermined force, wherein:
- the hooking module (86) comprises a part (864) deformable under the predetermined force and in the direction of this force;
- the deformable part has an omega, U or C shaped section, with a central portion (8642) and two intermediate tabs (8646);
- the deformable part is fixed, by its central portion, to a first structure (82; 44) among the tray and the wall;
- the deformable part is fixed, by end plates (8644), connected to the central portion by the intermediate tabs, or by free edges of its intermediate tabs, to a second structure (44; 82) among the wall and the tray; **characterised in that**
- the hooking module (86) comprises a frame (866) for guiding and limiting the deformations of the deformable part (864).

2. The table (8) according to claim 1, **characterised in that** the intermediate tabs (8646) diverge from the end plates (8644) towards the central portion (8642) or from the free edges of the intermediate tabs (8646) towards the central portion, with an angle of divergence (α) comprised between 5 and 120 degrees, preferably equal to 20°.

3. The table (8) according to one of the preceding claims, **characterised in that** the deformable part (864) is provided with at least one hole (8645), preferably oblong, for creating a preferred deformation area (8641, 8643) of the deformable part.

4. The table (8) according to claim 3, **characterised in that** the deformable part (864) is provided with four holes (8645).

5. The table (8) according to one of claims 3 or 4, **characterised in that** the or each hole (8645) is located on a junction edge (8643) between an intermediate tab (8646) and an end plate (8644) or on a junction edge (8641) between an intermediate tab and the central portion (8642).

6. The table (8) according to one of the preceding claims, **characterised in that** the deformable part (864) is accommodated within a volume (V866) defined by the guide frame (866), **in that** the guide frame is in the form of a parallelepipedal box with walls (8666) for guiding the deformations parallel to the predetermined force and walls (8668) for limiting the deformations perpendicular to the predetermined force.

7. The table (8) according to one of the preceding claims, **characterised in that** the deformable part (864) consists of a metal strip, preferably made of carbon steel, with a thickness comprised between 0.5 and 8 mm, preferably equal to 4 mm.

8. The table (8) according to one of the preceding claims, **characterised in that** the deformable portion (864) is made in one piece, by cutting and bending a sheet metal.

9. A vehicle (2), in particular a railway vehicle, for transporting passengers (P), comprising seats (6) and at least one table (8) arranged opposite at least one seat, **characterised in that** the table (8) is according to one of the preceding claims.
